# EUROPÄISCHE PATENTANMELDUNG

(11) **EP 1 513 052 A2**
(43) Veröffentlichungstag der Anmeldung: **09.03.2005**
(21) Anmeldenummer: 04019728.7
(22) Anmeldetag: 19.08.2004
(51) Int. Cl.: G06F 3/033

(54) **Tabelle in einem Bildschirmfenster und Verfahren zur Datensuche in einer Tabelle**

(30) Priorität: 25.08.2003 DE 10339021
(71) Anmelder: Tenovis GmbH & Co. KG, 60362 Frankfurt am Main (DE)
(72) Erfinder: Pfeil, Thomas, 65558 Holzheim (DE)
(74) Vertreter: Heinze, Ekkehard, Dipl.-Phys. Dr.

(57) **Zusammenfassung**

Die Erfindung betrifft eine Tabelle (10) in einem Bildschirmfenster (20) mit in Zeilen (30) und Spalten (40) angeordneten Zellen (50), wobei jeder Spalte ein in einer Spaltenüberschrift (55) benanntes Attribut zugeordnet ist. Erfindungsgemäß weist die Tabelle eine Suchzeile (60) mit aktivierbaren Suchzellen (65) in mindestens einer Spalte, insbesondere in mehreren Spalten, auf, wobei in mindestens eine Suchzelle ein dem Attribut der zugeordneten Spalte entsprechendes Attributdatum zum Durchsuchen des Inhaltes der Spalte eingegeben werden kann. Ein damit verbundenes Verfahren zur Datensuche in der Tabelle (10) umfasst die Verfahrensschritte eines Eingebens eines Attributdatums in mindestens eine Suchzelle einer zusätzlichen Suchzeile der Tabelle; ein Starten einer Suche; ein Ausführen der Suche im Inhalt der entsprechenden Spalte der Suchzelle und ein Anzeigen eines Suchergebnisses.

## Beschreibung

Die Erfindung betrifft eine Tabelle in einem Bildschirmfenster nach dem Oberbegriff des Anspruchs 1 und ein Verfahren nach dem Oberbegriff des Anspruchs 11.

Tabellen in Bildschirmfenstern sind ein bekanntes und vielfältig genutztes Mittel in der Datenverarbeitung auf PCs, Workstations, PDAs etc. und werden insbesondere im Rahmen von Tabellenkalkulationsprogrammen, Mess- und Auswertungssoftware oder zum Verwalten umfangreicher Datenmengen verwendet. Die Tabellen bestehen hierbei aus Zellen, die zu Zeilen und Spalten angeordnet sind und in der Regel in einem Bildschirmfenster angezeigt werden.

Üblicherweise werden die Eigenschaften der in die Zellen eingegebenen Daten spaltenweise verwaltet und manipuliert. Das betrifft insbesondere den Datentyp (numerisch, String, Datum und dergleichen Formate), aber auch besondere Datenattribute, mit denen den eingegebenen Daten Bedeutungen zugewiesen werden können, die sich aus dem jeweiligen Kontext ergeben, in dem die Daten verwendet werden. Beispiele hierfür sind insbesondere Kundennummern, Eingangs- und Ausgangsdaten, Telefonnummern, Kommentare und dergleichen Attribute mehr.

Zum Verwalten und Verarbeiten derartiger tabellarisch geordneter Daten stellen die jeweiligen Programme Software-Werkzeuge (Tools) bereit. Diese Werkzeuge umfassen insbesondere Ordnungs- bzw. Suchfunktionen für die Daten einer Spalte. Im Allgemeinen wird zum Ausführen einer Suchfunktion eine Spalte markiert und, in der Regel mittels eines Mousecursors, aus einer Menüleiste ein Unterprogramm aufgerufen, das die Eingabe weiterer Suchspezifikationen erlaubt.

Derartige Eingaben erfolgen nach dem Stand der Technik in Eingabemasken, die innerhalb separater Bildschirmfenster angezeigt werden und das Tabellenareal teilweise verdecken. Dabei tritt jedoch das Problem auf, dass oftmals gerade diejenigen Tabellenbereiche überdeckt werden, die der Benutzer für eine Zusammenstellung einer Suchabfrage im Auge behalten muß. Vor allem dann, wenn die Datenmengen in einer Tabelle besonders umfangreich oder komplex sind und gewisse Suchabfragen in einer Spalte in Abhängigkeit von Daten anderer Spalten erfolgen müssen, geht bei derartigen Eingabemasken für den Benutzer schnell der Überblick verloren, welche Daten in welcher Spalte er in Abhängigkeit gewisser anderer Daten in anderen Spalten zu suchen beabsichtigt. Der Benutzer muß sich unter diesen Umständen eine ganze Reihe überflüssiger und lästiger Nebeninformationen, wie zum Beispiel Spaltennamen, gewisse logische Abhängigkeiten zwischen den Spalten, Beginn und Ende der in den jeweiligen Spalten gegebenen "Zahlenkolonnen" und weitere, an sich für ihn uninteressanter Informationen notieren oder merken. Es versteht sich, dass ein derartiges Vorgehen umständlich, zeitraubend und fehlerträchtig ist.

Es besteht somit die Aufgabe, eine Tabelle in einem Bildschirmfenster und ein Verfahren anzugeben, bei denen Suchoperationen in tabellarisch gelisteten, insbesondere in Spalten gegebenen Daten in einer Weise ausgeführt werden können, dass die genannten Probleme weitgehend vermieden werden. Weiterhin besteht die Aufgabe, eine einfache und möglichst intuitive Benutzerführung zum Aufruf der Suchfunktion bereit zu stellen, wobei insbesondere einfach zu erkennende Zuordnungen zwischen den von den Suchoperationen erzeugten Abfragen und Ergebnissen einerseits und den Daten in einer Spalte andererseits erzeugt werden. Weiterhin sind logische Verknüpfungen und Abhängigkeiten zwischen den Daten einer Spalte mit den Daten einer weiteren Spalte in besonders einfacher Weise in deren Eingabe und Ausgabe zu gestalten.

Die genannten Aufgaben werden mit einer Tabelle in einem Bildschirmfenster mit den Merkmalen des Anspruchs 1 und einem Verfahren zur Datensuche in einer Tabelle mit den Merkmalen des Anspruchs 11 gelöst. Die Unteransprüche enthalten zweckmäßige Ausgestaltungen des Erfindungsgedankens.

In der hier gegebenen Beschreibung wird der Begriff "Suche" gleichbedeutend zu dem Begriff "Filtern" angewendet, unabhängig davon, ob die Suchoperationen, auf die sich die gegebene Beschreibung bezieht, genau ein mit einem gesuchten Datum übereinstimmendes nächstes Element oder alle übereinstimmende Elemente ermittelt und anzeigt.

Der in der folgenden Beschreibung erscheinende Begriff "Wildcards" beschreibt Stellvertreterzeichen, die zu einer Verallgemeinerung des Suchdatums verwendet werden. Beispiele sind die bekannten Stellvertreterzeichen "*" bzw. "?", mit denen beispielsweise Zeichenketten oder einzelne Zeichen in einem Suchbegriff ersetzt werden.

Erfindungsgemäß weist die Tabelle eine Suchzeile mit aktivierbaren Suchzellen in mindestens einer Spalte auf, wobei in mindestens eine Suchzelle ein dem Attribut der zugeordneten Spalte entsprechendes Attributdatum zum Durchsuchen des Inhaltes der Spalte eingegeben werden kann.

Einige Tabellenzellen sind somit als aktivierbare Suchzellen in mindestens einer Spalte ausgebildet. Durch das Aktivieren der Suchzelle ist es möglich, ein Attributdatum als "Suchbegriff" einzugeben, das dem Attribut der zugeordneten Spalte entspricht und nach welchem die Daten innerhalb der betreffenden Spalte durchsucht werden. Die Suchzellen selbst sind zweckmäßigerweise so über dem Tabellenareal verteilt, dass diese eine leicht erkenn- und bedienbare Teilstruktur der Tabelle bilden. Es wird eine Anordnung der Suchzellen in Form einer Zeile bevorzugt, wobei die so gegebene Gesamtheit der Suchzellen eine Suchzeile ausbildet.

Zweckmäßigwerweise ist die Suchzeile unter einer Überschriftszeile der Tabelle angeordnet. Dies kann die Überschriftszeile der gesamten Tabelle oder die Zeile der jeweiligen Spaltenüberschriften der Tabelle sein. Durch diese Anordnung wird ein visuell leicht zu erfassendes Strukturmerkmal der Tabelle gebildet, wobei in leicht erkennbarer Weise die einzelnen Suchzellen den jeweiligen Spalten der Tabelle in der Umgebung des Tabellenkopfes zugeordnet werden.

Die Suchzellen erlauben eine Eingabe von Wildcards und ermöglichen so eine durch den Benutzer regulierbare Suchtiefe.

Die Anzeige des Suchergebnisses kann auf zwei Arten erfolgen. Bei einer ersten Ausführungsform wird das Suchergebnis in der Tabelle selbst angezeigt. Das Suchergebnis kann bei dieser Ausführungsform optional als ein Datum angezeigt werden, das sofort in eine dafür vorgesehene Tabellenzelle oder auch in einer weiteren Suchzelle eingetragen wird.

Bei einer zweiten Ausführungsform erfolgt die Anzeige in einem separaten Fenster. Hierbei wird somit im wesentlichen auf die bekannten Dialogfelder zurückgegriffen, die für grafische Benutzeroberflächen typisch sind.

In eine Suchzelle können zweckmäßigerweise mehrere Attributdaten eingegeben werden. Diese Ausgestaltung berücksichtigt, dass die zu suchenden Daten mehrdeutig einer Gesamtheit von Attributen zugeordnet sein können, wobei entweder mehrere Attribute in den Daten einer Spalte gleichzeitig vorhanden sein können oder auch von Spalte zu Spalte wechseln. Eine Eingabemöglichkeit mehrerer Attributdaten beinhaltet somit die Vorteile, dass der Suchvorgang in einer Spalte möglichst viele Spaltendaten erfaßt oder die Attribute anderer Spalten mit berücksichtigt, sofern Beziehungen oder Abhängigkeiten zwischen den Spalten existieren.

Vorteilhafterweise ist die Suchzeile so ausgeführt, dass diese Suchzellen in allen Spalten aufweist. Diese Ausgestaltung gewährleistet eine größtmögliche Funktionalität der Suchzeile und ermöglicht es, die Suchzeile als ein sehr mächtiges Funktionsmerkmal der Tabelle auszuführen, wobei jeder Tabellenspalte eigene spezielle Suchfunktionen zugewiesen werden, die bei Bedarf aktiviert werden können.

Zweckmäßigerweise sind die Inhalte mehrerer Suchzellen für ein Ausführen einer Suche logisch miteinander verknüpft. Durch dieses Merkmal wird die gegenseitige Verknüpfung der Tabellespalten in der Weise berücksichtigt, dass ein Suchdatum einer zweiten Spalte bei Bedarf auch über ein eingegebenes Suchdatum einer ersten Spalte ermittelt werden oder zumindest eingegrenzt werden kann und somit ein "Quersuchen" innerhalb der gesamten Tabellendaten ermöglicht wird.

Eine Suchzelle kann insbesondere eine alle Inhalte einer Spalte enthaltende Listbox aufweisen. Mit diesem Merkmal ist es möglich, über die Aktivierung einzelner und einer Reihe von Checkboxen innerhalb der Listbox zugeordneten Attribute die gesuchten Daten mittels eines bekannten Anklickens mit einer Maustaste in effektiver und zweisparender Weise auszuwählen bzw. zu filtern.

Die Listbox ist in diesem Fall zweckmäßigerweise so gestaltet, dass sie für alle verschiedenartigen Inhalte der Spalte jeweils eine Checkbox aufweist. Damit wird sichergestellt, dass jedes beliebige Datenattribut bzw. jedes beliebige Datenformat innerhalb der Daten der Spalte in einfacher Weise angewählt werden kann.

Ein Verfahren zur Datensuche in einer Tabelle mit in Zeilen und Spalten angeordneten Zellen, bei der jeder Spalte ein in einer Spaltenüberschrift benanntes Attribut zugeordnet ist, zeichnet sich aus durch die Verfahrensschritte: Bereitstellung mindestens einer Suchzelle einer zusätzlichen Suchzeile der Tabelle; Starten einer Suche im Ansprechen auf das Eingeben eines Attributdatums; Ausführen der Suche im Inhalt der entsprechenden Spalte der Suchzeile und Anzeige des Suchergebnisses. Die Suchzelle stellt demnach - unter Verfahrensaspekten - eine Eingabemöglichkeit für eine Eingabe eines Suchdatums bereit und bildet somit eine gleichsam in die Tabelle integrierte Eingabemaske, die bei Bedarf aktiviert wird.

Das Verfahren kann durch einen Verfahrensschritt ergänzt werden, bei dem ein Aufrufen der Suchzeile erfolgt. Hierbei ist die aus den Suchzellen bestehende Suchzeile nicht von vornherein auf der Anzeige vorgegeben, sondern wird bei Bedarf mittels einer geeigneten Eingabe (beispielsweise einem Mausklick, einer Befehlseingabe oder im Rahmen eines vergleichbaren weiteren Aktivierungsvorgangs) an einem zweckmäßigen Ort der Tabelle angezeigt.

Die Suche wird durch ein von einem Benutzer initiiertes Ereignis gestartet. Dieses Ereignis kann beispielsweise ein Mausdoppel- oder Einfachklick auf einem dafür vorgesehenen Befehlsfeld, eine Betätigung der Enter-Taste auf der Tastatur oder eine weitere Eingabe eines Zeichens oder Startsignals sein.

Zweckmäßigerweise enthält die Tabelle genau eine Suchzeile mit mehreren Suchzellen. Dadurch wird die Übersichtlichkeit der gesamten Struktur gewahrt und die Tabelle nicht mit unnötigen Leistungsmerkmalen überlastet. Die Suchzelle wird zweckmäßigerweise in einer Zeile unter einer Überschriftszeile der Tabelle, d.h. unter dem Tabellenkopf erzeugt.

Wie bereits erwähnt, erlauben die Suchzellen eine Eingabe von Stellvertreterzeichen, den sogenannten "Wildcards". Die Anzeige des Suchergebnisses kann entweder in der Tabelle, insbesondere den Tabellenzellen oder in einem separaten Fenster erfolgen. Eine Eingabe mehrerer Attributdaten in eine Suchzelle ist im Rahmen dieses Verfahrens wie bereits beschrieben möglich.

Die erfindungsgemäße Tabelle in einem Bildschirmfenster, die Suchzeile, die Suchzelle und das erfindungsgemäße Verfahren sollen nun an einem Ausführungsbeispiel anhand der Figuren näher erläutert werden. Es werden für gleiche oder gleichwirkende Objekte die selben Bezugszeichen verwendet. Es zeigen:
- Fig. 1: ein Beispiel einer Tabelle in einem Bildschirmfenster mit einer Anordnung aus Suchzellen in einer beispielhaften Suchzeile und
- Fig. 2: ein Beispiel einer durch Aktivierung einer Suchzelle erzeugte Listbox mit einer Reihe von Checkboxen.

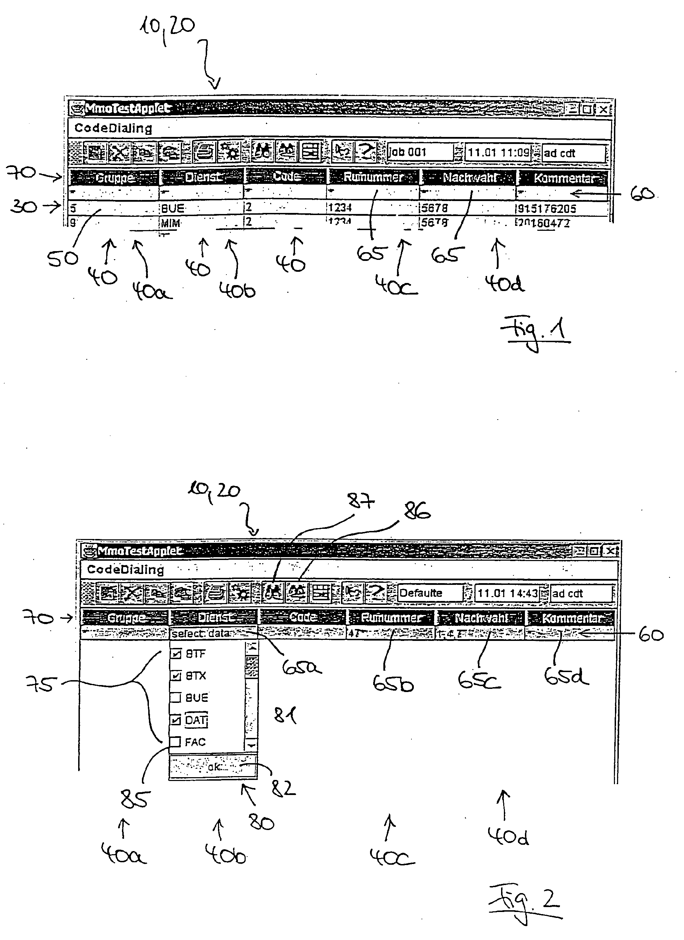

Fig. 1 zeigt eine Tabelle 10 in einem Bildschirmfenster 20. Die Tabelle weist eine hier nur abschnittsweise angedeutete Gesamtheit von Zeilen 30 und eine Mehrzahl von Spalten 40 auf. Die Zeilen und Spalten definieren eine Gesamtheit von Zellen 50 in der Tabelle, in welche Daten eingeschrieben sind. Die zu einer festen Spalte bei einer veränderlichen Zeile gehörenden Daten bilden die jeweiligen Spaltendaten in der Tabelle, die in Abhängigkeit von der Tabellengröße eine sehr umfangreiche Datenmenge umfassen können, wobei diese ein Teil der in der gesamten Tabelle gespeicherten Datenmenge ist und mit den Daten der anderen Spalten in der Regel in logischen Beziehungen steht.

Die in Fig. 1 gezeigte Tabelle 10 weist eine Suchzeile 60 auf, die aus einer Reihe von Suchzellen 65 aufgebaut ist. In dem in Fig. 1 gezeigten Ausführungsbeispiel ist die Suchzeile unmittelbar unter dem Tabellenkopf, einer Überschriftszeile 70 der Tabelle 10, angeordnet. Wie aus Fig. 1 zu entnehmen ist, erstreckt sich die Suchzeile 60 über alle Spalten 40 der Tabelle, wobei die jeweiligen Suchzellen 65 für eine Attributeingabe zum Ausführen einer Suche ausgelegt sind. Diese entsprechen den jeweils in den Spalten 40 durch die Überschriftszeile 70 angedeuteten Attributen der Spaltendaten.

So weist beispielsweise die in Fig. 1 mit "Gruppe" bezeichnete Spalte 40a eine Reihe von Attributen auf, die beispielsweise die Eingabe eines gewissen Gruppencodes ermöglicht und mittels einer Plausibilitätsprüfung sicherstellt, dass keine unzulässigen Daten in die zu dieser Spalte gehörenden Zellen eingegeben werden können. In ähnlicher Weise sind Attribute für die zu der mit "Dienst" bezeichneten Spalte 40b vorgegeben. Diese legen in diesem Ausführungsbeispiel fest, dass nur Eingaben aus der Menge der als "BTF", "BTX", "BUE", "DAT", "FAC" und dergleichen weiteren vordefinierten Zeichenketten in diese Spalte eingegeben werden können.

Die Spaltendaten einer ersten Spalte können logisch mit den Spaltendaten einer zweiten Spalte verknüpft sein. So erlauben beispielsweise die Spalten 40c und 40d mit der beispielhaften Bezeichnung "Rufnummer" bzw. "Nachwahl" Eingaben von numerischen Zeichenketten, die mit dem Attribut "Telefonnummer" abgespeichert werden. Die logische Verknüpfung zwischen den erwähnten Spalten kann nun beispielhaft darin bestehen, dass zu einer bereits erfolgten Eingabe in der Spalte "Rufnummer" nur eine oder eine begrenzte Zahl von möglichen Eingaben in die Spalte "Nachwahl" erfolgen kann, weil aus bestimmten Gründen einer gewissen Menge von Rufnummern nur ganz bestimmte Nachwahlen zugeordnet sein können. Die Spaltendaten der Spalten "Rufnummer" und "Nachwahl" sind somit logisch verknüpft und können darüber hinaus auch einander paarweise zugeordnet sein.

Ebenso können die Spalten 40b und 40c bzw. 40d logisch miteinander verknüpft sein. So kann eine Eingabe einer Zeichenkette "BTF", "BTX" oder "DAT" mit gewissen Rufnummern oder Nachwahlen logisch verknüpft sein, die eine ganz bestimmte, den Eingaben in Spalte 40b zugeordnete Ziffernfolge aufweisen.

Diese jeweils vom konkreten Anwendungsfall abhängigen Spaltenattribute und logischen Datenverknüpfungen werden von den jeweiligen Suchzellen 65 in der Weise berücksichtigt, dass zum ersten eine Aktivierung einer Suchzelle 65 in einer ersten Spalte Suchfunktionen bereitstellt, die genau auf die Attribute der Daten in dieser Spalte angepaßt sind. So ist es insbesondere möglich, dass eine Aktivierung der Suchzelle 65 in der Spalte "Dienst" eine (im folgenden näher beschriebene) Listbox erzeugt, während eine Aktivierung der Suchzelle 65 in der Spalte "Nachwahl" zusätzlich zur Eingabe einer numerischen Zeichenkette eine Eingabe einer Rufnummer in einer Eingabemaske abfragt oder vordefinierte Rufnummern vorab bereitstellt. Zum zweiten werden die Eingaben an einer bestimmten Suchzelle entsprechend der vorliegenden logischen Verknüpfungen zwischen den Daten in den Spalten auch an die anderen Suchzellen weitergeleitet oder schränken den Suchbereich in den anderen Suchzellen entsprechend der feststehenden logischen Verknüpfungen ein.

In Fig. 2 wird ein Beispiel für eine Verwendung einer Suchzelle 65 gezeigt, wobei alle weiteren Suchzellen mit der ersten Suchzelle in diesem Ausführungsbeispiel als logisch verknüpft angenommen werden. Zu Beginn erfolgt eine Aktivierung einer speziellen Suchzelle 65a in der mit "Dienst" bezeichneten Spalte 40b. In Antwort auf die Aktivierung der speziellen Suchzelle 65a wird zur Auswahl unter einer vorgegebenen Menge von Attributen 75 eine Listbox 80 erzeugt, die eine Reihe von Checkboxen 85 enthält.

In dem in Fig. 2 dargestellten Beispiel weist die Listbox 80 eine begrenzte Größe auf und enthält aus diesem Grund einen Rollbalken 81 für einen bekannten Scrollvorgang über der Listbox. Ein Bestätigungsfeld 82 dient der Übernahme der in einer Listbox getroffenen Auswahl in die entsprechende Suchzelle 65a. Die Suche wird nach Vervollständigung aller für die Suche relevanten Suchzellen mit dem Button 86 gestartet. Die Suchzeile kann mit dem Button 87 aus- und einschaltet werden.

Mittels der Checkboxen 85 können nun beliebige Attribute ausgewählt werden, die auf die entsprechenden Spaltendaten angewendet werden sollen. In dem in Fig. 2 dargestellten Beispiel werden die zu den Attributen "BTF", "BTX" und "DAT" gehörenden Checkboxen 85 ausgewählt. In Verbindung mit diesem Suchvorgang wird jedoch eine Reihe von logischen Verknüpfungen zwischen der Spalte 40b "Dienst" und den jeweils anderen Spalten 40c und 40d aktiviert, wobei diese nachfolgende Suchvorgänge in diesen Spalten eingrenzen. Diese Begrenzung ist ein Bestandteil des Suchergebnisses innerhalb des durch das Suchfeld 65a erzeugten Suchvorgangs und wird in den speziellen Suchzellen 65b, 65c und 65d, also innerhalb der Tabelle 10 angezeigt.

In dem in Fig. 2 gezeigten Beispiel geschieht dies, indem die durch die logischen Verknüpfungen zwischen den Spalten 40b, 40c und 40d in Frage kommenden Sucheingaben bereits auf den Feldern der Suchzellen 65b, 65c und 65d angezeigt werden. So wird in dem hier dargestellten Beispiel durch die in der Suchzelle 65a getroffene Auswahl der Checkboxen der Attribute "BTF", "BTX" und "DAT" eine Einschränkung der Sucheingabe in der Suchzelle 65b auf die numerischen Eingaben "47*" vorab festgelegt und für die Suchzelle 65b die für eine Eingabe sinnvollen numerischen Daten auf die Menge der Zahlen "1,4,7" eingegrenzt und für den Benutzer angedeutet.

Die Suchzeile 60 mit den in ihr enthaltenden Suchzellen 65 erlaubt es somit, durch Eingabe eines Suchdatums unter Zugriff auf die in zwischen den Spaltendaten gesetzten logischen Abhängigkeiten, die in einer Tabelle abgespeicherten Daten zu durchmustern, ohne eine oft umfangreiche Reihe von einzelnen Suchfunktionen für jede Spalte auszuführen und dabei die Daten der anderen Spalten stets im Auge behalten zu müssen. Die von den einzelnen Suchzellen 65 aktivierten Suchfunktionen sind auf die Eigenschaften der Daten in den jeweiligen Spalten abgestimmt, die Suchzellen selbst sind den jeweiligen Spalten in einer einfach erfassbaren visuellen Weise zugeordnet und beziehen die logischen Abhängigkeiten zwischen den jeweils anderen Spalten mit ein.

### Bezugszeichenliste

- 10: Tabelle
- 20: Bildschirmfenster
- 30: Zeile
- 40: Spalte, allgemein
- 40a, 40b, 40c, 40d: spezielle Spalte
- 50: Zelle, allgemein
- 55: Spaltenüberschrift
- 60: Suchzeile
- 65: Suchzelle, allgemein
- 65a, 65b, 65c, 65d: spezielle Suchzelle
- 70: Überschriftszeile
- 75: Attributdaten
- 80: Listbox
- 81: Rollbalken
- 82: Bestätigungsfeld
- 85: Checkbox

## Patentansprüche

1. Tabelle (10) in einem Bildschirmfenster (20) mit in Zeilen (30) und Spalten (40) angeordneten Zellen (50), wobei jeder Spalte ein in einer Spaltenüberschrift (55) benanntes Attribut zugeordnet ist,
**dadurch gekennzeichnet, dass**
die Tabelle eine Suchzeile (60) mit aktivierbaren Suchzellen (65) in mindestens einer Spalte, insbesondere in mehreren Spalten, aufweist, wobei in mindestens eine Suchzelle ein dem Attribut der zugeordneten Spalte entsprechendes Attributdatum zum Durchsuchen des Inhaltes der Spalte eingegeben werden kann.

2. Tabelle nach Anspruch 1,
**dadurch gekennzeichnet, dass**
die Suchzeile (60) unter einer Überschriftszeile (70) angeordnet ist.

3. Tabelle nach Anspruch 1 oder 2,
**dadurch gekennzeichnet, dass**
die Suchzellen (65) eine Eingabe von Wildcards ermöglichen.

4. Tabelle nach einem der vorhergehenden Ansprüche,
**dadurch gekennzeichnet, dass**
eine Anzeige des Suchergebnisses in der Tabelle (10) erfolgt.

5. Tabelle nach einem der Ansprüche 1 bis 3,
**dadurch gekennzeichnet, dass**
die Anzeige des Suchergebnisses in einem separaten Fenster erfolgt.

6. Tabelle nach einem der vorhergehenden Ansprüche,
**dadurch gekennzeichnet, dass**
die Suchzelle (65) zur Eingabe mehrerer Attributdaten (75) ausgebildet ist.

7. Tabelle nach einem der vorhergehenden Ansprüche,
**dadurch gekennzeichnet, dass**
die Suchzeile (60) Suchzellen (65) in allen Spalten (40) aufweist.

8. Tabelle nach einem der vorhergehenden Ansprüche,
**dadurch gekennzeichnet, dass**
Inhalte mehrerer Suchzellen (65a, 65b, 65c, 65d) für ein Ausführen einer Suche logisch verknüpfbar sind.

9. Tabelle nach einem der vorhergehenden Ansprüche,
**dadurch gekennzeichnet, dass**
eine Suchzelle (65) eine alle Inhalte einer Spalte (40) enthaltende Listbox (80) aufweist.

10. Tabelle nach Anspruch 9,
**dadurch gekennzeichnet, dass**
die Listbox (80) für alle verschiedenartigen Inhalte der Spalte jeweils eine Checkbox (85) aufweist.

11. Verfahren zur Datensuche in einer Tabelle (10) mit in Zeilen (30) und Spalten (40) angeordneten Zellen (50), wobei jeder Spalte ein in einer Spaltenüberschrift (55) benanntes Attribut zugeordnet ist,
**gekennzeichnet durch**
die Verfahrensschritte
- Bereitstellen mindestens eine Suchzelle einer zusätzlichen Suchzeile der Tabelle;
- Eingeben eines Attributdatums in die Suchzelle;
- Starten einer Suche;
- Ausführen der Suche im Inhalt der entsprechenden Spalte der Suchzelle;
- Anzeigen eines Suchergebnisses.

12. Verfahren nach Anspruch 11,
**gekennzeichnet durch**
einen Verfahrensschritt
- Aufrufen der Suchzeile
nach dem Schritt des Bereitstellens der Suchzelle.

13. Verfahren nach einem der Ansprüche 11 oder 12,
**dadurch gekennzeichnet, dass**
die Suche durch ein von einem Benutzer initiiertes Ereignis gestartet wird.

14. Verfahren nach einem der Ansprüche 11 bis 13,
**dadurch gekennzeichnet, dass**
genau eine Suchzeile (60) mit mehreren Suchzellen (65) erzeugt wird.

15. Verfahren nach einem der Ansprüche 11 bis 14,
**dadurch gekennzeichnet, dass**
die Suchzeile (60) unter einer Überschriftszeile (70) angeordnet ist.

16. Verfahren nach einem der Ansprüche 11 bis 15,
**dadurch gekennzeichnet, dass**
die Suchzellen (65) eine Eingabe von Wildcards ermöglichen.

17. Verfahren nach einem der Ansprüche 11 bis 16,
**dadurch gekennzeichnet, dass**
eine Anzeige des Suchergebnisses in der Tabelle (10) erfolgt.

18. Verfahren nach einem der Ansprüche 11 bis 16,
**dadurch gekennzeichnet, dass**
eine Anzeige des Suchergebnisses in einem separaten Fenster erfolgt.

19. Verfahren nach einem der Ansprüche 11 bis 18,
**dadurch gekennzeichnet, dass**
in eine Suchzelle (65) mehrere Attributdaten (75) eingegeben werden.

20. Verfahren nach einem der Ansprüche 11 bis 19,
**dadurch gekennzeichnet, dass**
die Suchzeile (60) Suchzellen (65) in allen Spalten (40) aufweist.

21. Verfahren nach einem der Ansprüche 11 bis 20,
**dadurch gekennzeichnet, dass**
Inhalte mehrerer Suchzellen (65) für ein Ausführen einer Suche logisch verknüpft werden.

22. Verfahren nach einem der Ansprüche 11 bis 21,
**dadurch gekennzeichnet, dass**
die Suchzelle (65) eine alle Inhalte einer Spalte (40) enthaltende Listbox (80) aufweist.

23. Verfahren nach Anspruch 22,
**dadurch gekennzeichnet, dass**
die Listbox (80) für alle verschiedenartigen Inhalte der Spalte jeweils eine Checkbox (85) aufweist.
